(19) Europäisches Patentamt / European Patent Office / Office européen des brevets

(11) **EP 1 354 751 B1**

(12) **EUROPÄISCHE PATENTSCHRIFT**

(45) Veröffentlichungstag und Bekanntmachung des Hinweises auf die Patenterteilung:
**06.03.2013  Patentblatt 2013/10**

(51) Int Cl.:
*B60W 30/18* (2012.01)     *F16D 48/08* (2006.01)
*B60W 10/02* (2006.01)     *B60W 10/06* (2006.01)

(21) Anmeldenummer: 03101005.1

(22) Anmeldetag: **14.04.2003**

(54) **Vorrichtung zum Steuern des Anfahrvorgangs eines Kraftfahrzeugs mit einem Getriebe**

Device for controlling drive-off for a vehicle equipped with a transmission

Dispositif de commande du démarrage d'un véhicule automobile avec boite de vitesses

(84) Benannte Vertragsstaaten:
**DE FR**

(30) Priorität: **15.04.2002   DE 10216623**

(43) Veröffentlichungstag der Anmeldung:
**22.10.2003   Patentblatt 2003/43**

(73) Patentinhaber: **Continental Automotive GmbH**
**30165 Hannover (DE)**

(72) Erfinder:
• **Meitinger, Bernhard**
**83346 Bergen (DE)**
• **Rampeltshammer, Martin**
**93055 Regensburg (DE)**

(56) Entgegenhaltungen:
EP-A- 0 964 176     EP-A- 1 065 401
DE-A1- 4 442 025     DE-A1- 10 139 122
DE-A1- 19 751 225    DE-A1- 19 951 415

EP 1 354 751 B1

**Beschreibung**

Die Erfindung betrifft eine Vorrichtung zum Steuern des Anfahrvorgangs eines Kraftfahrzeugs mit einem Getriebe, wobei eine Kupplung als Anfahrelement dient.

Für moderne Kraftfahrzeuge spielt die Optimierung des Anfahrvorgangs eine entscheidende Rolle. Die Verbrauchsreduzierung ist dabei ein wichtiges Kriterium. Daneben darf der Fahrkomfort auf keinen Fall vernachlässigt werden. Dieser definiert sich im wesentlichen durch die Güte des Einkuppelns im Anfahrvorgang und bei Standardschaltsituationen. Werden diese als unangenehm empfunden, so ist es für einen Autohersteller nicht möglich, eine große Käufergruppe zu finden, auch wenn das Kraftfahrzeug diverse andere Vorteile gegenüber einem herkömmlichen Fahrzeug bietet. Daher muss nicht nur besonderer Wert auf eine Verbrauchsreduzierung durch eine sinnvolle Drehmomentaufteilung gelegt werden, sondern auch der Fahrkomfort muss berücksichtigt werden.

Die DE 101 39 122 A1, welche die Merkmale des Oberbegriffs des 1. Anspruchs offenbart, beschäftigt sich mit einem Verfahren, das das Anfahren und das Fahren eines Kraftfahrzeugs für den Fahrer komfortabler gestaltet. Die DE 101 39 122 A1 beschreibt ein Verfahren zur Steuerung wenigstens eines Antriebstrangbauteils eines Kraftfahrzeugs, welches eine Antriebseinrichtung aufweist, sowie eine im Antriebsstrang angeordnete Kupplungseinrichtung, ein Motorsteuergerät und ein Kupplungssteuergerät, wobei mittels des Motorsteuergeräts wenigstens ein erster Betriebskennwert des Antriebsstrangs gesteuert werden kann und wobei mittels des Kupplungssteuergeräts wenigstens ein zweiter Betriebskennwert des Antriebsstrangs gesteuert werden kann. Dabei werden vorbestimmte Signale zwischen dem Motorsteuergerät und dem Kupplungssteuergerät übertragen, die die Steuerungsaktivitäten wenigstens eines Steuergeräts dieser Steuergeräte betreffen.

Die DE 44 42 025 A1 beschreibt ein Verfahren zur Verbesserung des Anfahr-, Ankriech- und Rangierverhaltens von Kraftfahr-zeugen mit einem Ottomotor und einer elektronisch gesteuerten Reibkupplung. Mit Hilfe einer Zündwinkelverstellung nach spät wird im unteren Stellbereich des Fahrpedals die Motordrehzahl auf einen konstanten Wert begrenzt. In diesem Bereich wird zur Verbesserung des Anfahr-, Ankriech- und Rangierverhaltens des Kraftfahrzeuges die Kupplung proportional zur Fahrpedalverstellung eingestellt.

Die angesprochene Problematik besteht grundsätzliche bei allen Kraftfahrzeugen, die ein Getriebe aufweisen, wobei eine Kupplung als Anfahrelement dient. Insbesondere tritt das Problem bei Kraftfahrzeugen mit automatisiertem Handschaltgetriebe oder Doppelkupplungsgetriebe auf.

Daher liegt der Erfindung die Aufgabe zugrunde, eine Vorrichtung zum Steuern des Anfahrvorgangs eines Kraftfahrzeugs mit einem Getriebe zu schaffen, die einen verbrauchsarmen und komfortablen Anfahrvorgang ermöglicht.

Die Aufgabe wird durch eine Vorrichtung mit den Merkmalen des Patentanspruchs 1 gelöst. Vorteilhafte Weiterbildungen sind in den abhängigen Ansprüchen niedergelegt.

Die erfindungsgemäße Vorrichtung weist eine Kupplungssollmomentermittlung auf, durch die abhängig von der Fahrpedalstellung ein Kupplungssollmoment vorgegeben wird. Unabhängig davon wird durch eine Motorsolldrehzahlermittlung abhängig von der Fahrpedalstellung eine Motorsolldrehzahl vorgegeben. Ein Momentenregler regelt das Kupplungsistmoment auf das vorgegebene Kupplungssollmoment und ein Drehzahlregler regelt die Motoristdrehzahl auf die vorgegebene Motorsolldrehzahl.

Ein Ausführungsbeispiel der Erfindung wird im Folgenden anhand der Figuren erläutert. Beispielhaft ist dabei die Erfindung anhand eines Kraftfahrzeugs mit automatisiertem Handschaltgetriebe und einem Kurbelwellenstartergenerator beschrieben.

Es zeigen:

Figur 1     ein schematisches Blockschaltbild des Antriebsstrangs,
Figur 2     ein schematisches Übersichts-Blockschaltbild der Reglerstruktur,
Figur 3     ein schematisches Blockschaltbild der Kupplungssollmomentermittlung,
Figur 4     ein schematisches Blockschaltbild der Fahrpedalinterpretation,
Figur 5     eine grafische Darstellung der maximalen Radmomente in Abhängigkeit von der Fahrzeuggeschwindigkeit,
Figur 6     ein schematisches Blockschaltbild der Motorsolldrehzahlermittlung,
Figur 7     ein schematisches Blockschaltbild der gesamten Reglerstruktur,
Figur 8     ein schematisches Blockschaltbild der Zeitverzögerung,
Figur 9     ein schematisches Blockschaltbild der Drehmomentglättung,
Figur 10     ein schematisches Blockschaltbild des Drehmomentreglers und
Figur 11     ein schematisches Blockschaltbild des Drehzahlreglers.

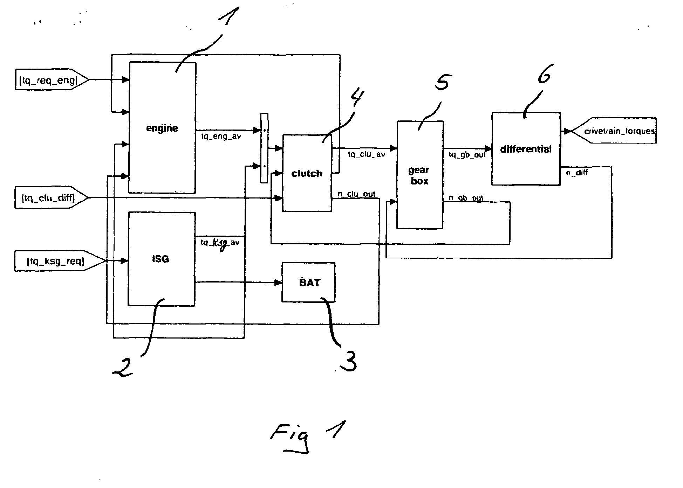

In Figur 1 ist das Modell des Antriebsstrangs eines Kraftfahrzeugs mit Kurbelwellenstartergenerator (KSG, ISG) dargestellt. Jedes Teilsystem ist in einem eigenen Subsystem abgelegt. Diese sind durch Pfeile verbunden. Die Pfeile symbolisieren Signalflüsse, Drehmomente oder Energieflüsse. An das Subsystem Motor (engine) 1 wird das geforderte Motormoment tq_req_eng angelegt. Im Modell des Motors 1 wird das vom Motor lieferbare Moment erzeugt.

Die Übertragungsfunktion des Motors wird vereinfacht als PT1-Glied genähert. Im Zeitbereich wird das aktuelle Motormoment tq_eng_av folgendermaßen berechnet:

$$T\_eng \bullet tq\_en\dot{g}\_av(t) + tq\_eng\_av(t) = tq\_req\_eng(t) \qquad (1)$$

Daraus ergibt sich im Laplacebereich folgende Übertragungsfunktion:

$$\frac{tq\_eng\_av}{tq\_req\_eng} = \frac{1}{1 + T\_eng \bullet s} \qquad (2)$$

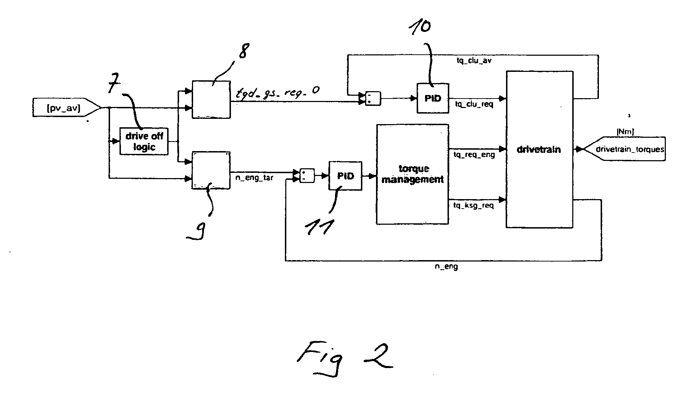

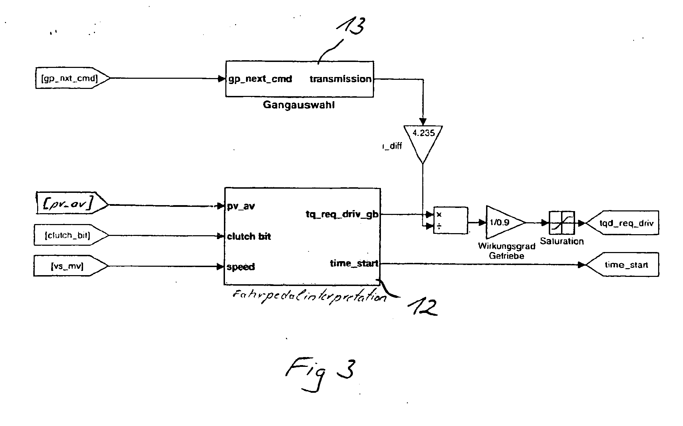

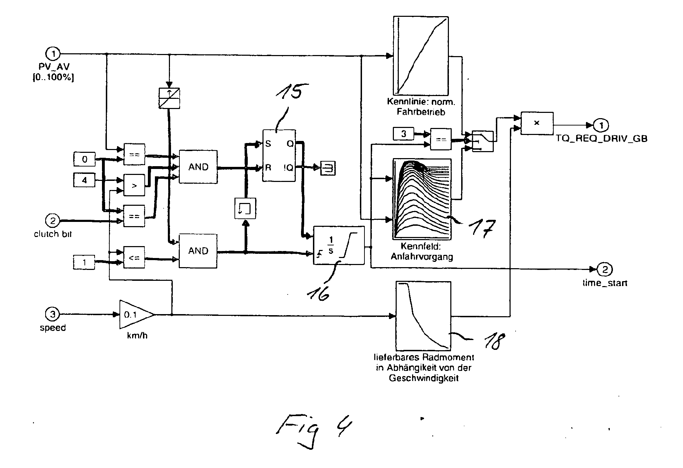

Außerdem sind in dem Motormodell ein Leerlaufdrehzahlregler, ein Maximaldrehzahlbegrenzer und ein Drehmomentbegrenzer eingebaut, um das Verhalten des Antriebs möglichst realitätsnah simulieren zu können.
Im Block ISG 2 ist ein Modell für den Kurbelwellenstartergenerator (ISG) abgelegt. Dessen Übertragungsfunktion wird mit einem Verzögerungsglied erster Ordnung, und mit kleiner Zeitkonstante beschreiben. Auch in diesem Subsystem wird das Drehmoment t_ksg_av durch eine Volllastkennlinie begrenzt, um nur plausible Werte zu erhalten. Über das Wirkungsgradkennfeld wir der benötigte bzw. erzeugte Strom berechnet. Dieser wird in das Batteriemodell (BAT) 3 geführt. Daraus kann der aktuelle Ladezustand der Batterie ermittelt werden.
Das Drehmoment beider Antriebe wird aufaddiert und liegt an der Kupplung (clutch) 4 an. In Abhängigkeit von der Kupplungsposition wird ein bestimmtes Drehmoment tq_clu_av an das Getriebe (gear box) 5 übertragen. In dem Modul Kupplung 4 wird außerdem ein Signal n_clu_out erzeugt, das den Zustand "Kupplung nicht geschlossen" angibt. Damit kann zwischen einem Anfahrvorgang beziehungsweise einem Schaltvorgang und normalem Fahrbetrieb unterschieden werden.
Im Subsystem Getriebe 5 werden das Eingangsmoment tq_clu_av und die Eingangsdrehzahl n_diff mit der jeweiligen Getriebeübersetzung multipliziert. Analog dazu wird im Modul Differentialgetriebe (differential )6 die Übersetzung des Differentialgetriebes multipliziert. Dadurch ergibt sich die Geschwindigkeit und das Drehmoment am Rad.
Die Struktur des Regleraufbaus soll anhand eines vereinfachten Blockdiagramms (Figur 2) verdeutlicht werden. Als Eingangssignal steht der Software beim Anfahrvorgang in einem Fahrzeug die Gaspedalstellung pv_av als Fahrerwunsch zur Verfügung. Aus diesem Signal und dem Systemzustand - Geschwindigkeit, Kupplungsposition, etc. - erkennt eine Anfahrlogik (drive off logic) 7, ob eien Anfahrvorgang gewünscht wird. Bei Erkennen eines solchen erzeugt eine Kupplungssollmomentermittlung 8 ein Kupplungszielmoment oder Kupplungssollmoment tqd_gs_reg_0. In einem Block Motorsolldrehzahlermittlung 9 wird eine Motorsolldrehzahl n_eng_tar für den Anfahrvorgang erzeugt. Das Kupplungszielmoment wird in einem Momentenregler 10, vorzugsweise in einem PID-Regler, mit dem Kupplungsistmoment tq_clu_av verglichen. Dieser versucht das Istmoment einzuregeln. Analog dazu erzeugt ein Drehzahlregler 11 für die Motordrehzahl aus der Geschwindigkeitsdifferenz ein Motorzielmoment, um die Solldrehzahl zu erreichen. Das Kupplungsmoment wirkt direkt als Störgröße auf die Drehzahlregelung und den Motor. Eine Störgröße in der Strecke wird aber durch den Drehzahlregler 11, der vorzugsweise als PID-Regler ausgeführt ist, ausgeregelt. Für die Drehmomentregelung wird eine radmomentenbasierte Regelung verwirklicht.
Anhand von Figur 3 wird im folgenden die Kupplungssollmomentermittlung 8 detailliert beschrieben. In einem Block Fahrpedalinterpretation 12 wird mit Hilfe eines Kennfelds ein Radmoment tq_req_driv_gb in Abhängigkeit von der Zeit und der Gaspedalstellung pv_av bestimmt. Das Kennfeld kann beispielsweise auf entsprechenden Fahrversuchen basieren. Das Kennfeld liefert in Abhängigkeit von der Gaspedalstellung pv_av in einem Zeitraum von 3 Sekunden einen genau definierten Wert tq_req_driv_gb für das Radmoment. Die Zeitspanne von nur 3 Sekunden ist für fast alle Einkuppelvorgänge ausreichend, da die Kupplung eine möglichst geringe Schließzeit aufweisen soll, um den Verschleiß klein zu halten. Nach dieser Zeitspanne wird in den normalen Fahrbetrieb umgeschaltet.
Das Radmoment wird über die Getriebeübersetzung des eingelegten Gangs, die Differentialgetriebeübersetzung (i_diff) und den Wirkungsgrad des Getriebes auf ein Kupplungsmoment tqd_req_driv umgerechnet.
In dem Subsystem Gangauswahl 13 wird aus einer Gangvorgabe gp_nxt_cmd - zum Beispiel Werte von 1 bis 5 - die Getriebeübersetzung ausgewählt. Die Funktionsweise der Fahrpedalinterpretation 12 soll nun anhand von Figur 4 im Detail erklärt werden, da diese von zentraler Bedeutung für komfortables Anfahren ist.
Die Software im Fahrzeug muss zunächst erkennen, ob es sich bei dem Fahrerwunsch um einen Anfahrvorgang handelt. Das ist der Fall, wenn folgende Bedingungen erfüllt sind:

1. Die Gaspedalstellung überschreitet einen Schwellwert von 1%.
2. Die Fahrzeuggeschwindigkeit ist kleiner als die minimale Geschwindigkeit bei geschlossener Kupplung

$$\left(4\frac{km}{h}\right)$$

3. Die Kupplung ist offen: clutch bit = 0.

Sobald diese Voraussetzungen erfüllt sind, schaltet ein R/S-FlipFlop 15 auf 1, ein Integrator 16 wird zurückgesetzt und beginnt hoch zu zählen. Unterbricht der Fahrer den Anfahrvorgang, wird das R/S-FlipFlop 15 auf 0 gesetzt und der Integrator 16 bekommt als Eingangsgröße den Wert 0. Wird der Anfahrvorgang normal beendet, so schaltet die Logik (Logiksignale sind durch fette Linien gekennzeichnet) auf die Kennlinie für normalen Betrieb um.

Sobald ein Anfahrvorgang unter en oben genannten Bedingungen erkannt wird, zählt der Integrator 16 von 0 bis 3 Sekunden. Ein komplettes Kennfeld 17 für den Anfahrvorgang wird dabei durchlaufen und ein normierter Wert für das Drehmoment am Rad ausgegeben.

Zuletzt benötigt man zur Berechnung des geforderten Radmoments das maximal vom Motor lieferbare Moment in Abhängigkeit von Geschwindigkeit und der Getriebeübersetzung. Der Geschwindigkeitsbereich für die jeweilige Übersetzungsstufe errechnet sich aus nachfolgender Gleichung. Dazu müssen der Reifenradius und die Übersetzungsverhältnisse im Antriebsstrang bekannt sein.

$$v = \left(\frac{r_{rad} \bullet n\_eng \bullet 2 \bullet 3.14}{i_{gear} \bullet i_{diff}}\right) \bullet \frac{3.6}{60} \qquad (3)$$

mit

v = Fahrzeuggeschwindigkeit
$r_{rad}$ = Reifenradius
n_eng = Motordrehzahl

$$\frac{1}{min}$$

$i_{gear}$ = Getriebeübersetzung
$i_{diff}$ = Differentialübersetzung

In Abhängigkeit von der Motordrehzahl erhält man für den ersten Gang (z. B. $i_{diff}$ = 4.235 und $i_{gear1}$ = 3.3) einen Geschwindigkeitsbereich von $4\frac{km}{h} - 50\frac{km}{h}$. Analog dazu wird das maximale Drehmoment in Abhängigkeit von der Motordrehzahl nach Gleichung 4 berechnet.

$$tq\_rad(n\_eng) = tq\_max(n\_eng) \bullet i_{gear} \bullet i_{diff} \qquad (4)$$

mit

tq_rad(n_eng) = maximales Radmoment in Abhängigkeit von der Motordrehzahl

tq_max(n_eng) = maximales Motormoment in Abhängigkeit von der Motordrehzahl

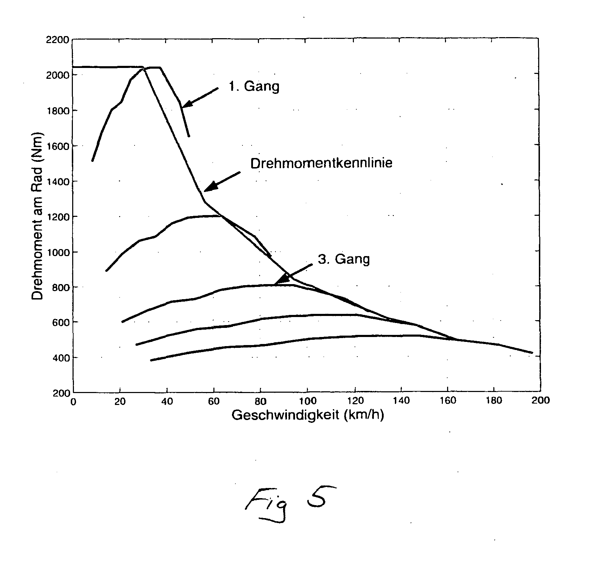

In Figur 5 sind für alle fünf Getriebeübersetzungen die maximalen Radmomente aufgetragen. Dadurch ist es möglich, eine Kennlinie zu erstellen, die das maximal mögliche, bzw. gewünschte Drehmoment angibt. Die Kennlinie liegt in einigen Bereichen deutlich unter dem maximal möglichen Radmoment. Als Beispiel dient dazu das gewünschte Moment im 1. Gang. Entspräche die Kennlinie dem maximal möglichen Moment, so würde ein sportlicher Fahrer erst bei $50\,\dfrac{km}{h}$ in den 2. Gang schalten. Da eine Hochschaltung aber bereits spätestens bei einer Geschwindigkeit von $35\,\dfrac{km}{h}$ erwünscht ist, wird die Kennlinie in diesem Bereich abgesenkt. Für sehr kleine Geschwindigkeiten wird der Kurvenverlauf deutlich über das maximale Motormoment angehoben, da hier der Kurbelwellenstartergenerator sehr viel zusätzliches Moment liefern kann.

Die Kennlinie 18 ist in das System Fahrpedalinterpretation 12 integriert (vgl. Figur 4: "lieferbares Radmoment in Abhängigkeit von der Geschwindigkeit") und gibt ein maximal mögliches Radmoment für die aktuelle Fahrzeuggeschwindigkeit aus. Dieses wird mit dem normierten Wert aus dem Kennfeld multipliziert. So ergibt sich das gewünschte Radmoment tq_req_driv_gb - im Folgenden auch als Fahrerwunschmoment bezeichnet.

Als weitere Sollgröße muss die Zieldrehzahl n_eng_tar des Motors für die jeweilige Anfahrsituation ermittelt werden. Dies geschieht im Block Motorsolldrehzahlermittlung 9. Dieser benötigt folgende Eingangsgrößen:

- *pv_av* = Gaspedalstellung
- - *n_gb_in* = Drehzahl des Getriebes (motorseitig)
- - *time_start* = Timer, der bei Beginn des Anfahrvorgangs zu Zählen beginnt
- - *n_gb_in_grd_mv* = Gradient der Getriebedrehzahl
- - *stop_bit* =Schaltet 0.2 Sekunden nach Beginn des Anfahrvorgangs von 1 auf 0
- - *pv_av_tar* = Liefert die Gaspedalstellung nach 0.2 Sekunden.

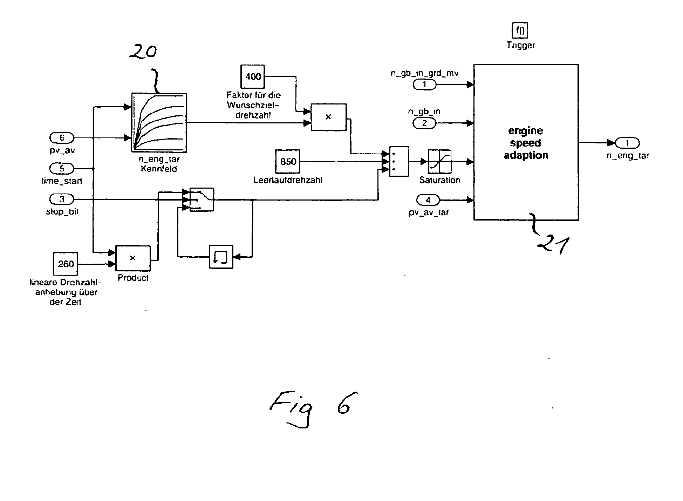

In Figur 6 ist die Struktur zur Zieldrehzahlbestimmung zu sehen. Dazu wurde als zentrales Element der Drehzahlvorgabe ein Kennfeld 20 in Abhängigkeit von der Geschwindigkeit und der Zeit erstellt. Dieses verhindert zu sprunghafte Änderungen der Motordrehzahl und gibt eine über der Zeit ansteigende Motordrehzahl aus, was einen sanften Übergang in den normalen Fahrbetrieb ermöglicht. Da das Kennfeld auf 1 normiert ist, wird der Wert mit einem konstanten Faktor multipliziert. Zu diesem Wert wird die Leerlaufdrehzahl addiert. Die Leerlaufdrehzahl wird durch den Faktor "lineare Drehzahlanhebung über der Zeit" innerhalb von 0.2 Sekunden nach Beginn des Anfahrvorgangs auf 900 Umdrehungen angehoben, um ein Abwürgen des Motors zu verhindern. Im Block Drehzahladaption (engine speed adaption) 21 wird die Motordrehzahl am Ende des Einkuppelvorgangs leicht angehoben, um ein ruckhaftes Einkuppeln zu verhindern. Aus Fahrversuchen ist bekannt, dass die gewünschten Motordrehzahlen für normales Anfahren sehr niedrig sind. Diese liegen im Extremfall nur wenig über der Leerlaufdrehzahl. Die maximale Einkuppeldrehzahl soll nicht über $1800\,\dfrac{1}{min}$ steigen. Der Drehzahlverlauf soll so gestaltet werden, dass möglichst wenig Energie verbraucht wird.

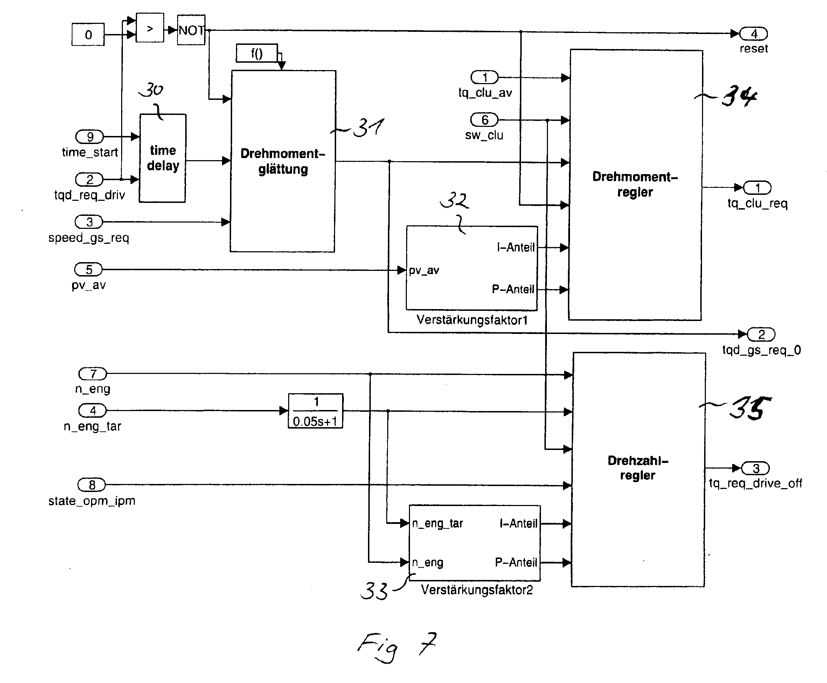

In Figur 7 ist die gesamte Reglerstruktur zum Steuern des Antriebstrangs während eines Anfahrvorgangs als Blockschaltbild dargestellt. Neben den beiden Reglern für das Regeln des Kupplungsmoments (Drehmomentregler) und der Motordrehzahl (Drehzahlregler) sind in vier Subsystemen weitere Zusatzfunktionen integriert, um ein optimales Einkuppeln zu erhalten. Das System ist wie folgt unterteilt:

- Zeitverzögerung (time delay) 30
- Drehmomentglättung 31
- "Verstärkungsfaktoren 1" 32 zur Berechnung der Verstärkungsfaktoren für den Drehmomentregler
- "Verstärkungsfaktoren 2" 33 zur Berechnung der Verstärkungsfaktoren für den Drehzahlregler
- Drehmomentregler 34
- Drehzahlregler 35

Diese Unterprogramme werden im folgenden beschrieben:

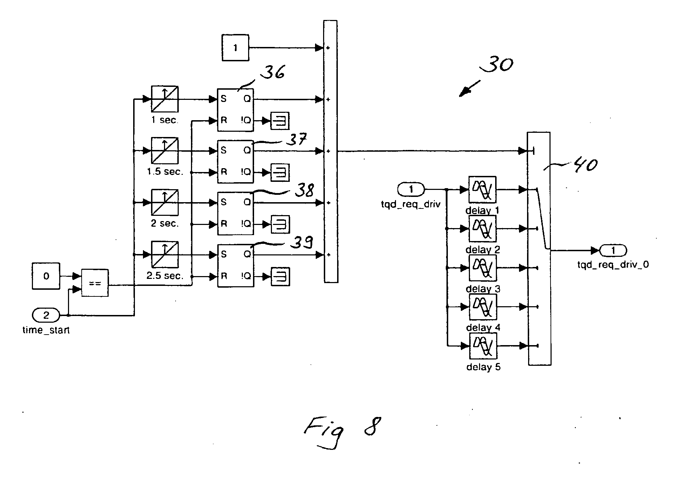

Im Block Zeitverzögerung 30 werden die folgenden Eingangssignale benötigt (Figur 8)

- tqd_req_driv = Fahrerwunschmoment
- time_start

Je nach Fahrzeugtyp ist eine bestimmte Zeitverzögerung beim Drehmomentaufbau durch die Trägheiten im Antriebsstrang vorhanden. In einem Referenzfahrzeug betrug diese bis zum Aufbau einer nennenswerten Beschleunigung 0.3 Sekunden. Diese wurde im Rahmen von Fahrversuchen allgemein als angenehm empfunden, nur bei sportlichen Anfahrvorgängen wurde diese als zu lang bewertet. Bei sportlicheren Versuchsfahrzeugen bewerteten die Testfahrer den schnelleren Drehmomentaufbau zumeist negativ. Aus diesem Grund wurde eine Zeitverzögerung 30 integriert, um auch bei einem sportlicheren Fahrzeug ein mit dem Referenzfahrzeug vergleichbares Anfahrverhalten zu erhalten. Dadurch ist ein sportliches, aber nicht zu aggressives Anfahren erreichbar. Die Zeitverzögerung wird innerhalb des Anfahrvorgangs auf 0 Sekunden abgebaut, so dass nach dem Anfahren keine Verzögerungen bei der Gaspedalinterpretation auftreten und der Motor direkt auf den Fahrer reagiert.

Figur 8 zeigt die Vorgehensweise zur Reduktion der Zeitverzögerung. R/S-FlipFlops 36 bis 39 schalten nach der jeweils angegebenen Zeit von 0 auf 1. Dadurch erhöht sich die Summe am Eingang eines Umschalters 40 bei fortlaufender Zeit. Das Fahrerwunschmoment tqd_req_driv wird bei Erkennen eines Anfahrvorgangs über einen Block delay 1 (Zeitverzögerung = 0.2 Sekunden) geleitet. Nach 2.5 Sekunden hat der Schalter 40 bereits auf den Eingang 5 geschaltet und das Fahrerwunschmoment wird über einen Block delay 5 (Zeitverzögerung =0 Sekunden) geführt. So wird die erwünschte Zeitverzögerung schrittweise bis auf 0 reduziert.

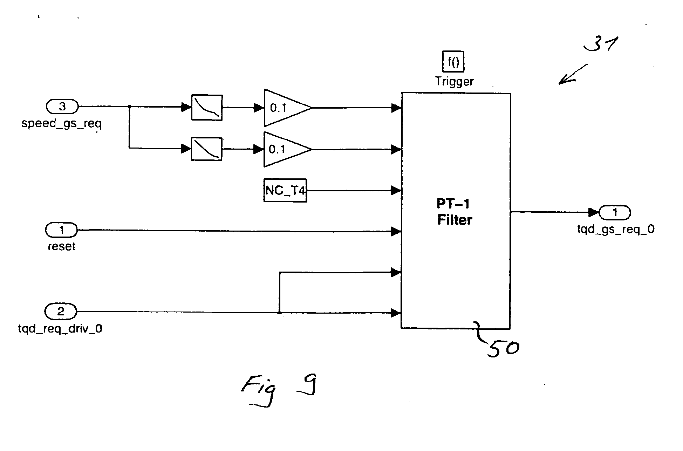

In dem Block Drehmomentglättung 31 wird das Wunschdrehmoment durch einen PT1-Filter mit variablen Zeitkonstanten geglättet (Figur 9). Dazu werden die drei folgenden Eingangssignale benötigt:

- tqd_req_driv_0 = Fahrerwunschmoment
- speed_gs_req = Sportlichkeitswert
- reset = Rückstellsignal

Ein Signal, das die Sportlichkeit des Anfahrvorgangs beurteilt, wird an ein integriertes Antriebsstrangmanagement (IPM) geliefert. Dieses liefert die Zeitkonstanten für ein PT1 Filter 50. Der Filter 50 arbeitet aber nur, wenn das Eingangssignal größer Null ist. Durch ein Signal "reset" wird die Glättung nur für positive Drehmomente durchlaufen. Negative Drehmomente werden ungefiltert weitergeleitet.

Für den Drehmomentregler 34 muss der I-Anteil online bestimmt werden, da sich die Zeitkonstanten des Antriebsstrangs während des Schließens der Kupplung ändern. Zur Einstellung des Verstärkungsfaktors benötigt man die Gaspedalstellung pv_av.

Somit errechnet sich der Wert nach Gleichung 5.

$$V_{I-Drehmomentregler} = a - \frac{pv\_av}{b} \qquad (5)$$

a = konstanter Anteil ("Verstärkung ohne Gas")
b = Quotient zur Bewertung der Gaspedalstellung

Die Werte a und b wurden für unterschiedliche Gaspedalstellungen über eine Konstante "manuelle Einstellung" ermittelt. Die anderen Verstärkungsfaktoren (P- und D-Anteil für PID-Regler) können konstant gehalten werden.

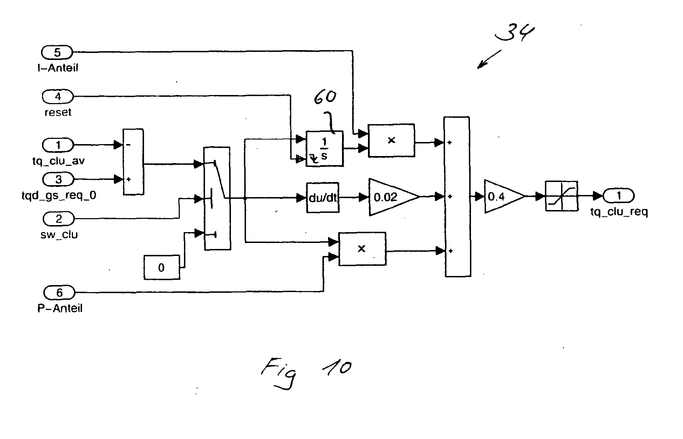

Nachdem die Verstärkungsfaktoren bestimmt worden sind, werden diese dem Drehmomentregler 34 übergeben. Außerdem benötigt man das Sollmoment tqd_gs_req_0 und das Istmoment tq_clu_av an der Kupplung und zwei Logiksignale um den Regler 34 nur beim Anfahrvorgang zu nützen (Figur 10).

Folgende Signale werden benötigt:

- tqd_gs_req_0 = geglättetes Fahrerwunschmoment (Sollmoment an der Kupplung)
- tq_clu_av = Istmoment an der Kupplung
- reset = Rückstellsignal
- sw_clu = Kupplungsbit
- I-Anteil
- P-Anteil

Der Drehmomentregler 34 regelt aus der Differenz zwischen Kupplungs-Sollmoment tqd_gs_req_0 und Istmoment tq_clu_av den Verlauf der Drehmomentvorgabe ein. Da der Regler 34 nur beim Anfahrvorgang aktiv sein soll, setzt ein Kupplungsbit sw_clu die Regeldifferenz nach dem Schließen der Kupplung auf Null zurück. Ein Signal reset setzt einen Integrator 60 immer auf Null, wenn vom Fahrer kein Drehmoment gefordert wird. Durch diese zwei Randbedingungen ist die Reglerfunktion auf den Anfahrvorgang beschränkt. Das Umschalten zwischen normaler Fahrt und einem Anfahrvorgang geht so reibungslos vonstatten.

Analog zur Ermittlung der Verstärkungsfaktoren für den Drehmomentregler 34 werden der P-Anteil und der I-Anteil des Drehzahlreglers 35 bestimmt. Folgende Signale werden zur Bestimmung benötigt:

- n_eng_tar = Motorzieldrehzahl
- n_eng = Motordrehzahl

Für einen PID-Rgeler können die P- und D-Anteile des Reglers konstant gehalten werden. Nur der I-Anteil des Motordrehzahlreglers ändert sich nach folgender Gleichung

$$V_{I-Drehzahlregler} = a + \frac{n\_eng\_tar - n\_eng}{b} \qquad (6)$$

- a = konstanter Anteil ("Verstärkung ohne Gas")
- b = Quotient zur Bewertung der Gaspedalstellung

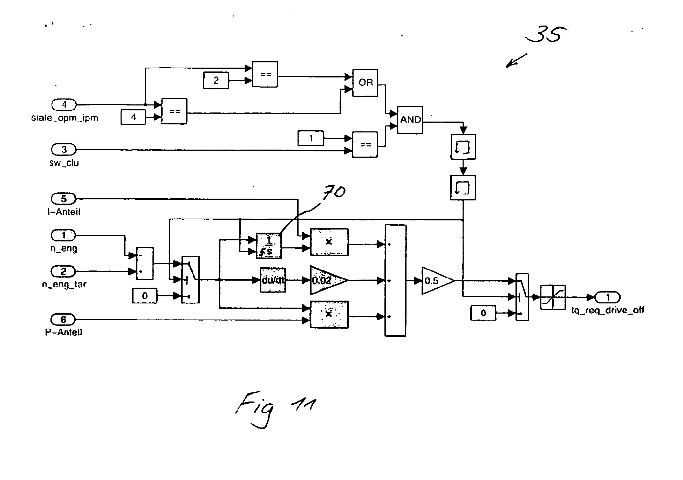

Der aus Drehzahldifferenz berechnete Faktor muss auf zulässige Werte beschränkt werden.
Zur Gewährleistung eines guten Anfahrvorgangs ist eine Motordrehzahlregelung notwendig. Dies hat gegenüber einer Momentenregelung den Vorteil, dass ein Solldrehzahlverlauf vorgegeben wird.
Mit dieser Sollwertvorgabe lassen sich sehr hohe Verbrauchseinsparungen realisieren. Zur Realisierung der Regelung sind außer dem Soll- und dem Istwert wiederum einige Logiksignale notwendig, damit die Regelung nur im Anfahrmodus aktiv ist (Figur 11):

- n_eng_tar = Motorzieldrehzahl
- n_eng = Motordrehzahl
- sw_clu = Kupplungsbit
- state_opm_ipm = Fahrsituation
- I-Anteil
- P-Anteil

Zuerst soll die Logik zur Drehzahlregelung näher erklärt werden.
Im Gegensatz zur Logik bei der Drehmomentenregelung ist es hier erforderlich, dass der Regler auch eine Drehzahl vorgibt, wenn vom Fahrer nach Beginn des Anfahrens kein Drehmoment gefordert wird, aber der Anfahrvorgang noch nicht ganz abgeschlossen ist. Als Beispiel soll folgende Fahrsituation erwähnt werden:
Der Fahrer will kurz beschleunigen und das Fahrzeug nach dieser kurzen Beschleunigungsphase ohne Gas mit der Leerlaufdrehzahl weiterrollen lassen. Daher muss die Regelung auch in diesem Fall aktiv sein. Dies erreicht man durch ein Signal state_ipm_opm. Folgende Zustände werden von diesem ausgegeben:

- 0 = Initialisierung
- 1 = Schnellstart des Verbrennungsmotors
- 2 = Leerlauf; Kupplung ist offen
- 3 = Start-/Stopfunktion ist aktiv; das Fahrzeug steht; der Motor ist abgeschalten
- 4 = Fahrbetrieb
- 5 = Bremsbetrieb

In Figur 11 wird deutlich, dass der Regler nur im Fahrbetrieb und im Leerlauf aktiv ist. Außerdem soll die Regelung bei geschlossener Kupplung deaktiviert werden, da dann der Anfahrvorgang als abgeschlossen gilt. Ein Integrator 70 wird bei steigender Flanke auf Null zurückgesetzt. Sobald das Signal eine logische "Eins" ausgibt, beginnt dieser zu integrieren (Startwert=0). Auch am Reglereingang liegt dann wieder die Drehzahldifferenz aus Sollwert n_eng_tar und Istwert n_eng an. Der Drehzahlregler gibt nun das aus der Differenz von n_eng_tar und n_eng errechnete Motormoment tq_req_drive_off aus.

**Patentansprüche**

1. Vorrichtung zum Steuern des Anfahrvorgangs eines Kraftfahrzeugs mit einem Getriebe, wobei eine Kupplung als Anfahrelement dient, **gekennzeichnet durch**

    - eine Kupplungssollmomentenermittlung (8) zur Vorgabe eines Kupplungssollmoments abhängig von der Fahrpedalstellung,

- eine Motorsolldrehzahlermittlung (9) zur Vorgabe einer Motorsolldrehzahl abhängig von der Fahrpedalstellung,
- einen Momentenregler (10) zum Regeln des Kupplungsistmoments auf das vorgegebene Kupplungssollmoment und
- einen Drehzahlregler (11) zum Regeln der Motoristdrehzahl auf die vorgegebene Motorsolldrehzahl, **dadurch** gekennzeichnet, dass

das Kupplungssollmoment und die Motorsolldrehzahl unabhängig voneinander vorgegeben werden, und wobei die Kupplungssollmomentermittlung (8) eine Fahrpedalinterpretation aufweist, **durch** die ein Sollradmoment abhängig von der Fahrpedalstellung und der Zeit bestimmt wird.

2. Vorrichtung nach Anspruch 1 , **dadurch gekennzeichnet, dass** aus dem Sollradmoment ein Kupplungssollmoment berechnet wird.

3. Vorrichtung nach Anspruch 2 , **dadurch gekennzeichnet, dass** sie eine Drehmomentglättung (31) in Form eines Filters zum Glätten des Kupplungssollmoments aufweist.

4. Vorrichtung nach Anspruch 1, **dadurch gekennzeichnet, dass** die Motorsolldrehzahlermittlung (9) ein Kennfeld (20) aufweist, aus dem abhängig von der Fahrpedalstellung und der Zeit eine Motorsolldrehzahl ausgelesen wird.

5. Vorrichtung nach Anspruch 4 , **dadurch gekennzeichnet, dass** die Motorsolldrehzahlermittlung (9) eine Drehzahladaption (21) aufweist, durch die die Motorsolldrehzahl am Ende eines Einkuppelvorgangs angehoben wird.

**Claims**

1. Device for controlling the starting process of a motor vehicle having a transmission, wherein a clutch serves as a starting element, **characterized by**

- a setpoint clutch torque determining means (8) for predefining a setpoint clutch torque as a function of the position of the accelerator pedal,
- a setpoint engine rotational speed determining means (9) for predefining a setpoint engine rotational speed as a function of the position of the accelerator pedal,
- a torque regulator (10) for adjusting the actual clutch torque to the predefined setpoint clutch torque, and
- a rotational speed regulator (11) for adjusting the actual engine rotational speed to the predefined setpoint engine rotational speed, **characterized in that** the setpoint clutch torque and the setpoint engine rotational speed are predefined independently of one another, and wherein the setpoint clutch torque determining means (8) has an accelerator pedal interpretation means by which a setpoint wheel torque is determined as a function of the position of the accelerator pedal and the time.

2. Device according to Claim 1, **characterized in that** a setpoint clutch torque is calculated from the setpoint wheel torque.

3. Device according to Claim 2, **characterized in that** said device has a torque smoothing means (31) in the form of a filter for smoothing the setpoint clutch torque.

4. Device according to Claim 1, **characterized in that** the setpoint engine rotational speed determining means (9) has a characteristic diagram (20) from which a setpoint engine rotational speed is read out as a function of the position of the accelerator pedal and the time.

5. Device according to Claim 4, **characterized in that** the setpoint engine rotational speed determining means (9) has a rotational speed adaptation means (21) which raises the setpoint engine rotational speed at the end of a clutch engagement process.

**Revendications**

1. Dispositif pour commander le processus de démarrage d'un véhicule à moteur avec une boîte de vitesses, dans lequel un embrayage servant d'élément de démarrage, **caractérisé par**

- une détermination de la valeur de consigne du couple d'embrayage (8) pour prédéfinir la valeur de consigne du couple d'embrayage en fonction de la position de la pédale d'accélérateur,
- une détermination de la valeur de consigne de la vitesse de rotation du moteur (9) pour prédéfinir une valeur de consigne de la vitesse de rotation du moteur en fonction de la position de la pédale d'accélérateur,
- un régulateur de couple (10) pour régler la valeur réelle du couple d'embrayage sur la valeur de consigne prédéfinie du couple d'embrayage, et
- un régulateur de vitesse de rotation (11) pour régler la valeur réelle de la vitesse de rotation du moteur sur la valeur de consigne prédéfinie de la vitesse de rotation du moteur,

**caractérisé en ce que** la valeur de consigne du couple d'embrayage et la valeur de consigne de la vitesse de rotation du moteur sont prédéfinies indépendamment l'une de l'autre, la détermination de la valeur de consigne du couple d'embrayage (8) comprenant une interprétation de la pédale d'accélérateur, grâce à laquelle une valeur de consigne du couple de roue est déterminée en fonction de la position de la pédale d'accélérateur et du temps.

2. Dispositif selon la revendication 1, **caractérisé en ce qu'**une valeur de consigne du couple d'embrayage est calculée à partir de la valeur de consigne du couple de roue.

3. Dispositif selon la revendication 2, **caractérisé en ce qu'**il présente un lissage du couple de rotation (31), sous forme d'un filtre, pour lisser la valeur de consigne du couple d'embrayage.

4. Dispositif selon la revendication 1, **caractérisé en ce que** la détermination de la valeur de consigne de la vitesse de rotation du moteur (9) présente un diagramme caractéristique (20), à partir duquel une valeur de consigne de la vitesse de rotation du moteur est lue en fonction de la position de la pédale d'accélérateur et du temps.

5. Dispositif selon la revendication 4, **caractérisé en ce que** la détermination de la valeur de consigne de la vitesse de rotation du moteur (9) présente une adaptation de la vitesse de rotation (21), grâce à laquelle la valeur de consigne de la vitesse de rotation du moteur est relevée à la fin d'un processus d'embrayage.

[tq_req_eng]

engine

*1*

[tq_clu_diff]

tq_eng_av

ISG

*2*

tq_ksg_av

[tq_ksg_req]

clutch

*4*

tq_clu_av

n_clu_out

BAT

*3*

gear
box

*5*

tq_gb_out

n_gb_out

differential

*6*

drivetrain_torques

n_diff

Fig 1

Fig 2

Fig 3

PV_AV
[0..100%]

clutch bit

speed

km/h

*15*

S    Q

R    !Q

*16*

Kennlinie: norm.
Fahrbetrieb

Kennfeld:
Anfahrvorgang

*17*

TQ_REQ_DRIV_GB

time_start

lieferbares Radmoment
in Abhängikeit von der
Geschwindigkeit

*18*

Fig 4

Fig 5

*20*

*21*

Fig 6

n_gb_in_grd_mv

n_gb_in

engine
speed
adaption

n_eng_tar

pv_av_tar

Trigger

Faktor für die
Wunschzieldrehzahl

pv_av

time_start

n_eng_tar
Kennfeld

stop_bit

Leerlaufdrehzahl

Saturation

Product

lineare Drehzahlanhebung über
der Zeit

Fig 7

Fig 8

Fig 9

Fig 10

Fig 11

**IN DER BESCHREIBUNG AUFGEFÜHRTE DOKUMENTE**

**In der Beschreibung aufgeführte Patentdokumente**

- DE 10139122 A1
- DE 4442025 A1